# EUROPÄISCHE PATENTSCHRIFT

(11) **EP 2 289 778 B1**
(45) Veröffentlichungstag und Bekanntmachung des Hinweises auf die Patenterteilung: **23.10.2013**
(21) Anmeldenummer: 10173778.1
(22) Anmeldetag: 24.08.2010
(51) Int. Cl.: B62J 1/08

(54) **Sattelstütze und Verfahren zur Längsverstellung eines Sattels**
Saddle support bracket and method for adjusting the longitudinal position of a saddle
Support de selle et procédé de réglage longitudinal d'une selle

(30) Priorität: 27.08.2009 DE 102009038732
(43) Veröffentlichungstag der Anmeldung: 02.03.2011
(73) Patentinhaber: Muff, André Armando, 8006 Zürich (CH)
(72) Erfinder: Muff, André Armando, 8006 Zürich (CH)
(74) Vertreter: Kohlmann, Kai

(56) Entgegenhaltungen:
- DE-U1-202004 005 281
- US-A- 3 933 391
- US-A- 4 983 063
- US-A- 5 568 958

## Beschreibung

Die Erfindung betrifft eine Sattelstütze mit einer an einem Sattelstützenkopf angeordneten Klemmvorrichtung für ein Sattelgestell, das zwischen parallel verlaufenden Klemmbereichen mindestens eines unteren und mindestens eines oberen Klemmteils klemmbar sind, wobei die Klemmbereiche in rinnenartigen Vertiefungen der Klemmteile liegen und wobei jedes Klemmteil Mittel zur lösbaren Verbindung mit dem Sattelstützenkopf aufweist und die sich über die Mittel zur lösbaren Verbindung jedes Klemmteiles in Richtung von dessen Stirnseiten erstreckenden Teile der Klemmbereiche unterschiedlich lang sind. Außerdem betrifft die Erfindung eine Klemmvorrichtung für eine Sattelstütze und ein Verfahren zur Längsverstellung eines Sattelgestells eins Sattels an einer Sattelstütze.

Die Sattelstütze ist bei einem Fahrrad ein Rohr insbesondere aus Stahl, Aluminium oder kohlenstofffaserverstärktem Kunststoff, das mit einer Klemmvorrichtung das Sattelgestell hält. Über das Sattelgestell wird eine Satteldecke gespannt. Zur Höhenverstellung des Sattels ist die Sattelstütze lösbar im Sitzrohr des Fahrradrahmens mit einer verschraubbaren Klemme, einer Schraube oder einem Schnellspanner befestigt.

Um eine optimale Sitzposition einzustellen, ist neben der Sattelhöhe auch die Sattellage verstellbar. Für diese Längsverstellung weist der Sattel ein Sattelgestell auf. Das Sattelgestell besteht insbesondere aus parallel verlaufenden Stäben. Es sind darüber hinaus auch Sattelgestelle bekannt geworden, die eine mittig angeordnete Schiene mit parallel verlaufenden, wulstförmig ausgeformten Längsrändern aufweisen.

Die zumindest im Verstellbereich parallel verlaufenden Stäbe bzw. wulstförmigen Längsränder des Sattelgestells sind zwischen parallel verlaufenden Klemmbereichen mindestens eines unteren und mindestens eines oberen Klemmteils klemmbar. Die Klemmbereiche liegen in rinnenartigen Vertiefungen zur Aufnahme der Stäbe bzw. Längsränder des Sattelstegs. Die Klemmteile sind insbesondere als Klemmplatten ausgeführt. Die bekannten Sattelgestelle bieten einen Verstellbereich von etwa 30 - 35 mm in im Wesentlichen horizontaler Richtung. Dieser Verstellbereich genügt oft nicht, um die optimale Position für den Fahrer einzustellen.

Die Hersteller bieten daher Sattelstützen an, deren Sattelstützenköpfe einen unterschiedlichen Versatz zur Achse des Sattelstützrohrs aufweisen. Die handelsüblichen VersatzPositionen bewegen sich zwischen 0 bis ca. 45 mm. Bei Standardsattelstützen weist der Sattelstützenkopf einen Versatz von etwa 25 mm zur Achse des Sattelstützrohres auf.

Einige Fahrer bevorzugen eine steilere Sitzposition und benötigen daher eine Sattelstütze, deren Sattelstützenkopf keinen oder einen geringen Versatz haben. Hierdurch werden unter anderem bessere Klettereigenschaften erzielt. Andere Fahrer wiederum bevorzugen flachere Sitzpositionen, weil sie längere Oberkörper und Oberschenkel haben.

Unabhängig davon, welche Position als optimal angesehen wird, bedarf es daher nach dem Stand der Technik zahlreicher Sattelstützen mit unterschiedlichen Versatzpositionen des Sattelstützenkopfs. Für den Fahrer bedeutet dies, dass er eine neue Sattelstütze erwerben muss, wenn die gewünschte Position mit der an dem Fahrrad verbauten Sattelstütze nicht einstellbar ist.

Die DE 20 2004 005 281 U1 offenbart eine Sattelstütze mit einem unteren und mit zwei oberen Klemmteilen einer Klemmvorrichtung, wobei die in rinnenartigen Vertiefungen liegenden Klemmbereiche des unteren Klemmteils länger als die Klemmbereiche der oberen Klemmteile sind. Zum Zwecke der Längsverstellung schlägt die DE 20 2004 005 281 U1 eine Doppel-T-Führungsschiene vor, in deren Längsnuten zwei Gleitböcke der Klemmvorrichtung geführt sind. Die Klemmvorrichtung wird mit Hilfe von Rastbolzen im Mittelsteg der Doppel-T-Führungsschiene verrastet. An der Doppel-T-Führungsschiene ist das Sattelrohr verankert.

Die US-A-3 933 391 offenbart eine gattungsgemäße Sattelstütze, die durch eine Kippbewegung zweier Klemmteile eine Neigungsverstellung des Sattels ermöglicht. Ferner ist der Sattel zwischen den beiden Klemmteilen mit seinen parallel verlaufende Stäben des Sattelgestells längs verstellbar.

Ausgehend von diesem Stand der Technik liegt der Erfindung die Aufgabe zugrunde, mit geringem konstruktivem Aufwand und preiswert den Längsverstellbereich des Sattels an einer Sattelstütze zu erweitern.

Die Lösung dieser Aufgabe beruht auf dem Gedanken, zur Erweiterung des Verstellbereichs lediglich die recht preiswerten Klemmteile der Klemmvorrichtung zu verändern, in dem jede Klemmplatte abweichend von den bisher üblichen Klemmplatten asymmetrisch in Bezug zur Lage des Mittels zur lösbaren Verbindung jedes Klemmteils mit dem Sattelstützenkopf ausgeführt ist, so dass durch eine Drehung jeder asymmetrischen Klemmplatte um 180 Grad um eine Achse senkrecht zur Klemmplattenoberfläche der Verstellbereich in Fahrtrichtung des Fahrrades nach vorne bzw. hinten erweitert werden kann.

Das Mehrgewicht asymmetrischer Klemmteile ist gegenüber symmetrischen Klemmteilen minimal, so dass die Erweiterung des Verstellbereichs keinerlei fahrdynamische Nachteile mit sich bringt. Falls die asymmetrischen Klemmteile der Sattelstütze noch keinen ausreichenden Verstellbereich bieten, können diese durch Klemmteile mit einer abweichenden Asymmetrie ohne nennenswerte Zusatzkosten ersetzt werden.

Im Einzelnen wird die Aufgabe durch eine Sattelstütze nach den Ansprüchen 1 oder 2 und durch eine Klemmvorrichtug mit den Merkmalen des Anspruchs 6 gelöst.

Die Stirnseiten befinden sich an dem am Fahrrad montierten Klemmteil in Fahrtrichtung vorne bzw. hinten.

Einer der beiden sich über die Mittel zur lösbaren Verbindung erstreckenden Teile der Klemmbereiche in der rinnenartigen Vertiefung ist vorzugsweise mindestens doppelt so lang wie der andere Teil, um einen ausreichenden Verstellbereich zu gewährleisten.

Als Mittel zur lösbaren Verbindung mit dem Sattelstützenkopf weist jedes Klemmteil vorzugsweise mindestens eine zwischen den Klemmbereichen angeordnete Durchtrittsöffnung für eine Klemmschraube auf. Durch Lösen, anschließendes Drehen jeder asymmetrischen Klemmplatte um 180 Grad um eine Achse senkrecht zur Klemmplattenoberfläche und anschließendes Verbinden mit dem Sattelstützenkopf wird der Verstellbereich in Fahrtrichtung des Fahrrades nach vorne bzw. hinten erweitert.

Alternativ kann das Mittel zur lösbaren Verbindung als zylindrischer, insbesondere im Querschnitt halbkreisförmiger Steg ausgestaltet sein, der die parallel verlaufenden Klemmbereiche aufweisenden Abschnitte des Klemmteils miteinander verbindet. Der Steg des unteren und oberen Klemmteils bildet zusammen einen Kreiszylinder, der von einer an dem Sattelstützenkopf ausgebildeten Spannvorrichtung umfasst wird, die mit einer zentralen Spannschraube die beiden Stege und damit die daran angeordneten Abschnitte mit den parallel verlaufenden Klemmbereichen gegeneinander verspannt.

Sofern die Klemmteile mit dem Sattelstützenkopf über Klemmschrauben und Durchtrittsöffnung lösbar verbunden werden, kann die Klemmvorrichtung ebenfalls ein unteres und ein oberes Klemmteil aufweisen, jedoch auch mit einem unteren Klemmteil mit zwei Durchtrittsöffnungen und zwei oberen Klemmteilen mit je einer Durchtrittsöffnung ausgeführt sein.

Um die Stäbe bzw. Ränder des Sattelgestells zwischen den Klemmelementen zu führen und die Montage der stets gleich ausgerichteten Klemmteile zu erleichtern, liegen die Klemmbereiche der Klemmteile in rinnenartigen Vertiefungen, die insbesondere dem Profilquerschnitt der Stäbe bzw. der Ränder des Sattelgestells angepasst sind.

Indem die Mittel zur lösbaren Verbindung der Klemmteile mit dem Sattelstützenkopf aufeinander abgestimmt sind, können die preiswerten Klemmteile ohne weiteres gegen Klemmteile mit einem anderen Versatz ausgetauscht werden, sofern der um 180 Grad versetzte Einbau des mit der Sattelstütze gelieferten Klemmteils für die Horizontalverstellung des Sattelgestells nicht ausreicht. Vorzugsweise wird die erfindungsgemäße Sattelstütze mit mehreren Klemmteilen geliefert, deren Klemmbereiche eine unterschiedliche Exzentrizität, d.h. einen unterschiedlichen Versatz der Klemmbereiche aufweisen.

Gegenüber symmetrischen, herkömmlichen Klemmplatten wird durch die asymmetrische Ausbildung der Klemmbereiche der Klemmelemente durch Drehen der Klemmplatten um 180 Grad ein zusätzlicher Verstellbereich von 10 - 30 mm erzielt.

Die längeren, der sich über die Mittel zur lösbaren Verbindung mit dem Sattelstützenkopf erstreckenden Teile der Klemmbereiche jedes Klemmteiles sind in beiden Positionen in gleicher Richtung ausgerichtet und vorzugsweise im Betrag gleich.

Nachfolgend wird die Erfindung anhand der Figuren näher erläutert. Es zeigen
- **Figur 1**: eine schematische Seitenansicht einer ersten erfindungsgemäßen Sattelstütze mit Klemmvorrichtung mit in Längsrichtung des Fahrrades orientiertem Sattelgestell,
- **Figur 2**: eine schematische Seitenansicht der Klemmteile,
- **Figur 3**: eine Draufsicht sowie
- **Figur 4**: eine Rückansicht der Klemmvorrichtung der Sattelstütze nach Figur 1
- **Figur 5**: eine schematische Seitenansicht einer zweiten erfindungsgemäßen Sattelstütze mit abweichender Klemmvorrichtung, die in Längsrichtung des Fahrrades ausgerichtet ist,
- **Figur 6**: eine schematische Seitenansicht der Klemmteile der Klemmvorrichtung der Sattelstütze nach Figur 5,
- **Figur 7**: eine Draufsicht auf die Klemmteile nach Figur 6 sowie
- **Figur 8**: eine Rückansicht der Klemmteile nach Figur 6

Die erfindungsgemäße Sattelstütze 1 besteht im wesentlichen aus einem Sattelstützrohr 2, das mit seinem unteren Ende von einem nicht dargestellten Sitzrohr eines Fahrradrahmens aufgenommen wird und dessen gegenüberliegendes Ende als Sattelstützenkopf 3 ausgebildet ist. Der Sattelstützenkopf 3 ist lösbar mit einer Klemmvorrichtung 4 für ein Sattelgestell 5 verbunden, dessen zumindest im Verstellbereich parallel verlaufende Stäbe zwischen parallel verlaufenden Klemmbereichen 6a, 6b eines unteren Klemmteils 7 und zweier oberer Klemmteile 8a, 8b klemmbar sind.

Das untere Klemmteil 7 weist zwei zwischen den Klemmbereichen 6a angeordnete Durchtrittsöffnungen 9a, 9b für eine Klemmschraube 10a, 10b auf, die die Klemmteile 7, 8a, 8b mit dem Sattelstützenkopf 3 verbindet und die zwischen den Klemmbereichen 6a, 6b verlaufenden Stäbe des Sattelgestells 5 zwischen den Klemmteilen verspannt.

Um eine begrenzte Neigungsverstellung des Sattelgestells 5 an der Sattelstütze 1 zu ermöglichen, greift die in Fahrtrichtung vordere Klemmschraube 10b in eine Gewindebohrung 11a eines um eine horizontale Achse schwenkbar in dem Sattelstützenkopf 3 gelagerten Bolzens 12 ein. Die hintere Klemmschraube 10a wird mit Spiel in dem Durchgang 13 des Sattelstützenkopfs 3 geführt, um eine beschränkte Drehung der Spannschraube 10b und damit der gesamten Klemmvorrichtung 4 zu ermöglichen. Die hintere Klemmschraube greift in eine Gewindebohrung 11b in der Durchtrittsöffnung 17a.

Das im Übrigen plattenförmige untere Klemmteil 7 weist an seiner Unterseite einen halbkreiszylindrischen Vorsprung 14 auf, der sich in einer entsprechend geformten muldenförmigen Aufnahme 15 des Sattelstützenkopfs 3 abstützt. Die beiden oberen Klemmteile 8a, 8b weisen außermittig einen sich im Wesentlichen lotrecht zu den Klemmbereichen 6b nach oben erstreckenden Ansatz 16a, 16b auf. Jede der beiden oberen Klemmteile 8a, 8b besitzt darüber hinaus je eine Durchtrittsöffnung 17a, 17b, die sich durch die Ansätze 16a, 16b hindurch erstrecken.

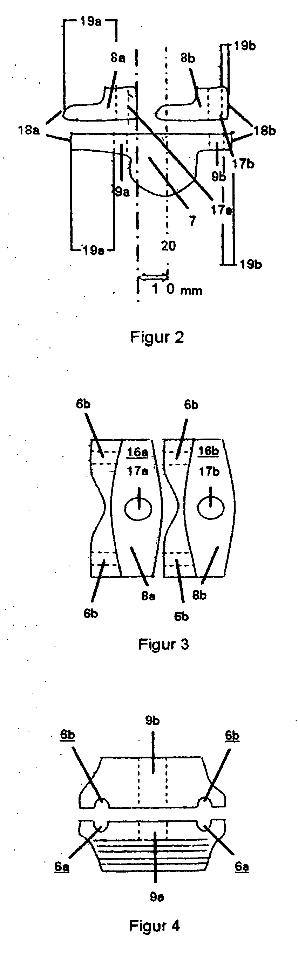

Die sich in der Seitenansicht des Klemmteils 7, 8a, 8b über die Durchtrittsöffnungen 9a, 9b, 17a, 17b jedes Klemmteils 7, 8a, 8b in Richtung von dessen Stirnseiten 18a, 18b erstreckenden Teile bzw. Abschnitte 19a, 19b des Klemmbereichs 6a, 6b sind unterschiedlich lang. Bezogen auf die durch die Aufnahme 15 definierte Position können daher die Klemmbereich 6a, 6b der Klemmteile 7, 8a, 8b durch Drehung der Klemmteile um die in Figur 2 dargestellte Mittenachse 20 um 180 Grad 10 mm nach hinten bzw. vorne verlagert und damit der Verstellbereich des Sattelgestells 5 erweitert werden. Wie aus den Figuren erkennbar, sind die längeren, der sich über die Durchtrittsöffnungen 9a, 9b, 17a, 17b erstreckenden Teile 19a der Klemmbereiche 6a, 6b sämtlicher Klemmelemente 7, 8a, 8b stets in gleicher Richtung ausgerichtet.

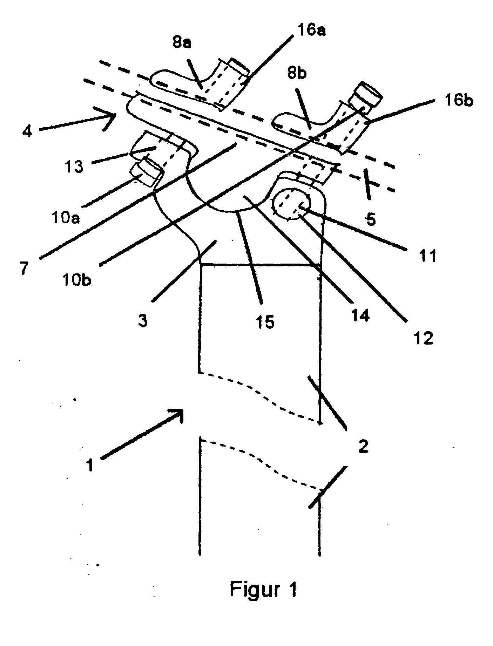

Um den Verstellbereich des Sattelgestells 5 aus der in Figur 1 dargestellten Position nach vorne zu verlagern, werden zunächst die Klemmschrauben 10a, 10b gelöst und die in der hinteren Position befindlichen Klemmteile 7, 8a, 8b von den Klemmschrauben entfernt.

Sodann werden die Klemmteile um 180 Grad um die Schraubenachsen verdreht wieder auf die Klemmschrauben 10a, 10b aufgesetzt.

Schließlich werden die Klemmschrauben 10a, 10b wieder angezogen und die zwischen den Klemmbereichen 6a, 6b befindlichen Stäbe des Sattelgestells 5 eingeklemmt, wobei nun die längeren Teile 19a der Klemmbereiche 6a, 6b in entgegengesetzter Richtung wie in den Figuren 1 - 4 dargestellt, ausgerichtet sind.

Um eine sichere Führung der Stäbe des Sattelgestells 5 zu gewährleisten, befinden sich die Klemmbereiche 6a, 6b in rinnenartigen Vertiefungen, die insbesondere aus Figur 4 deutlich erkennbar sind.

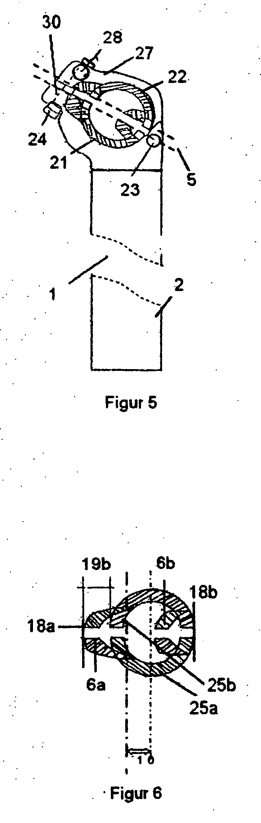

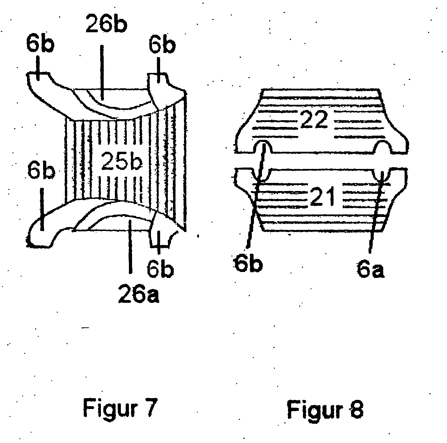

Figuren 5 bis 8 zeigen eine zweite erfindungsgemäße Sattelstütze 1 mit abweichender Klemmvorrichtung 4. Die Mittel zur lösbaren Verbindung der Klemmvorrichtung 4 mit dem Sattelstützenkopf 3 sind als zylindrische, im Ausführungsbeispiel im Querschnitt halbkreisförmige Stege 25a, 25b ausgestaltet, die die parallel verlaufenden Klemmbereiche 6b bzw. 6a aufweisenden Abschnitte 26a, 26b des oberen Klemmteils 22 bzw. des unteren Klemmteils 21 miteinander verbinden. Die Stege 25a, 25b des unteren und oberen Klemmteils 21, 22 bilden zusammen einen Kreiszylinder, der von einer an dem Sattelstützenkopf 3 ausgebildeten Spannvorrichtung umfasst wird. Die Spannvorrichtung besteht aus einem an einem Scharnier 23 des Sattelstützenkopfs 3 angelenkten Spannbügel 27, der an seinem dem Scharnier gegenüberliegenden Ende eine Bohrung mit einem Innengewinde 28 aufweist. Eine durch eine Durchtrittsöffnung 30 in den Sattelstützenkopf 3 geführte Klemmschraube 24 greift in das Innengewinde 28 ein und verspannt die beiden Stege 25a, 25b und damit die daran angeordneten Abschnitte 26a, 26b mit den parallel verlaufenden Klemmbereichen 6a, 6b gegeneinander.

Die Form der beiden Klemmteile 21,22 kann eine zu dem dargestellten Ausführungsbeispiel abweichende Form aufweisen, z.B. schalen- oder plattenförmig. Auch der Verstellbereich ist frei wählbar und durch Austausch der Klemmteile 21,22 schnell und kostengünstig realisierbar.

Der sich in der Seitenansicht des Klemmteils 21 bzw. 22 über den Steg 25 a bzw. 25 b in Richtung von dessen Stirnseite 18a erstreckende Teil bzw. Abschnitt 19b des Klemmbereichs 6 a bzw. 6 b überragt den Steg um etwa 10 mm. An der gegenüberliegenden Stirnseite des Klemmteils 21 bzw. 25 überragt der Klemmbereich 6a bzw. 6b in der Seitenansicht den Steg 25 a bzw. b im dargestellten Ausführungsbeispiel ausnahmsweise gar nicht. Für den dargestellten Sonderfall, dass der Klemmbereich 6a bzw. 6b in der Seitenansicht vor der Stirnseite 18 b endet oder exakt mit der Stirnseite 18 abschließt, wird für die vorliegende Erfindung davon ausgegangen, dass der sich in Richtung von dessen Stirnseite erstreckende "Teil" des Klemmbereichs 6a, 6b die Länge "Null" aufweist. In Bezug zu dem Steg 25 a bzw. 25 b ergibt sich auch auf diese Weise die angestrebte Asymmetrie der beiden Klemmelemente 21, 22.

Bezogen auf die durch die Aufnahme für die Stege 25 a,b in dem Sattelstützenkopf 3 definierte Position können die Klemmbereiche 6a, 6b der Klemmteile 21, 22 durch Drehung der Klemmteile um etwa 10 mm nach hinten bzw. vorne verlagert werden, wie dies in Figur 6 angedeutet ist. Die längeren, sich über die Stege 21, 22 erstreckenden Teile 19b der Klemmbereiche 6a, 6b beider Klemmelemente 21, 22 sind stets in gleicher Richtung ausgerichtet.

Es ist nicht zwingend eine spezielle Sattelstütze 1 erforderlich, um eine Längsverstellung zu realisieren. Man kann viele schon bestehende Sattelstützen umbauen indem man einfach die Klemmteile gegen asymmetrische Klemmteile 7, 8a, 8b, 21, 22 austauscht.

Der Kern der Erfindung besteht darin, dass die Klemmbereiche 6a,6b der Klemmteile 7,8a,8b,21,22 in Bezug auf die Mittel 9a,9b,17a,17b,10a,10b,25a,25b zur lösbaren Verbindung der Klemmteile mit dem Sattelstützenkopf asymmetrisch angeordnet sind, so dass durch Drehung der Klemmteile 7,8a,8b,21,22 um 180° im Sattelstützenkopf 3 die Sattelposition um beispielsweise 20mm in der horizontalen Länge verstellt werden kann. Hierfür bedarf es einer ausgeprägten Asymmetrie von mindestens 5 mm, vorzugsweise 10 mm.

### Bezugszeichenliste

| **Nr.** | **Bezeichnung** |
|---|---|
| 1 | Sattelstütze |
| 2 | Sattelstützrohr |
| 3 | Sattelstützenkopf |
| 4 | Klemmvorrichtung |
| 5 | Sattelgestell |
| 6a,6b | Klemmbereiche |
| 7 | Unteres Klemmteil |
| 8a, 8b | Obere Klemmteile |
| 9a, 9b | Durchtrittsöffnungen |
| 10a, 10b | Klemmschraube |
| 11a, 11b | Gewindebohrungen |
| 12 | Bolzen |
| 13 | Durchgang |
| 14 | Vorsprung |
| 15 | Aufnahme |
| 16a, 16b | Ansatz |
| 17a, | Durchtrittsöffnung mit Gewindebohrung, |
| 17b | Durchtrittsöffnung |
| 18a, 18b | Stirnseiten |
| 19a, 19b | Teile der Klemmbereiche |
| 20 | Mittenachse |
| 21 | unteres Klemmteil |
| 22 | oberes Klemmteil |
| 23 | Scharnier |
| 24 | Klemmschraube |
| 25a, 25b | Stege |
| 26a, 26 b | Abschnitte |
| 27 | Spannbügel |
| 28 | Innengewinde |
| 29 | - |
| 30 | Durchtrittsöffnung |

## Patentansprüche

1. Sattelstütze (1) mit einer an einem Sattelstützenkopf (3) angeordneten Klemmvorrichtung (4) für ein Sattelgestell (5), das zwischen parallel verlaufenden Klemmbereichen (6a, 6b) mindestens eines unteren und mindestens eines oberen Klemmteils (7,8a,8b) klemmbar ist, wobei die Klemmbereiche (6a, 6b) in rinnenartigen Vertiefungen der Klemmteile (7,8a,8b) liegen und wobei jedes Klemmteil (7,8a,8b) Mittel (9a,9b,17a,17b,10a,10b) zur lösbaren Verbindung mit dem Sattelstützenkopf (3) aufweist, wobei die sich über die Mittel (9a,9b,17a,17b,10a,10b) zur lösbaren Verbindung jedes Klemmteiles (7,8a,8b) in Richtung von dessen Stirnseiten (18a,18b) erstreckenden Teile (19a,19b) der Klemmbereiche (6a,6b) unterschiedlich lang sind, **dadurch gekennzeichnet, dass** die Klemmvorrichtung (4) ein unteres Klemmteil (7) mit zwei Durchtrittsöffnungen (9a,9b) und zwei obere Klemmteile (8a,8b) mit je einer Durchtrittsöffnung (17a,17b) aufweist.

2. Sattelstütze (1) mit einer an einem Sattelstützenkopf (3) angeordneten Klemmvorrichtung (4) für ein Sattelgestell (5), das zwischen parallel verlaufenden Klemmbereichen (6a, 6b) eines unteren und eines oberen Klemmteils (21,22) klemmbar ist, wobei die Klemmbereiche (6a, 6b) in rinnenartigen Vertiefungen der Klemmteile (21,22) liegen und wobei jedes Klemmteil (21,22) Mittel (25a, 25b) zur lösbaren Verbindung mit dem Sattelstützenkopf (3) aufweist, wobei die sich über die Mittel (25a, 25b) zur lösbaren Verbindung jedes Klemmteiles (21,22) in Richtung von dessen Stirnseiten (18a,18b) erstreckenden Teile (19a,19b) der Klemmbereiche (6a,6b) unterschiedlich lang sind, **dadurch gekennzeichnet,**
- **dass** die Mittel (25a, 25b) zur lösbaren Verbindung als zylindrische Stege (25a, 25b) ausgestaltet sind,
- **dass** der Steg (25a) des unteren Klemmteils (21) Abschnitte (26a, 26b) des unteren Klemmteils (21) miteinander verbindet, die die parallel verlaufenden Klemmbereiche (6a) aufweisen,
- **dass** der Steg (25b) des oberen Klemmteils (21) Abschnitte (26a, 26b) des oberen Klemmteils (21) miteinander verbindet, die die parallel verlaufenden Klemmbereiche (6b) aufweisen und
- **dass** der Steg (25a) des unteren und der Steg (25b) des oberen Klemmteils zusammen einen Kreiszylinder bilden, der von einer an dem Sattelstützenkopf (3) ausgebildeten Spannvorrichtung umfasst wird, die mit einer zentralen Spannschraube (24) die beiden Stege (25a, 25b) und damit die daran angeordneten Abschnitte (26a, 26b) gegeneinander verspannt.

3. Sattelstütze nach Anspruch 1, **dadurch gekennzeichnet, dass** jedes Klemmteil (7,8a,8b) mindestens eine zwischen den Klemmbereichen (6a,6b) angeordnete Durchtrittsöffnung (9a, 9b, 17a, 17b) für eine Klemmschraube (10a,10b) aufweist, die die Klemmteile (7,8a,8b) mit dem Sattelstützenkopf (3) verbindet und dass die sich über die Durchtrittsöffnung(en) (9a,9b,17a,17b) jedes Klemmteiles (7,8a,8b) in Richtung von dessen Stirnseiten (18a,18b) erstreckenden Teile (19a,19b) der Klemmbereiche (6a,6b) unterschiedlich lang sind.

4. Sattelstütze nach einem der Ansprüche 1 bis 3, **dadurch gekennzeichnet, dass** einer der beiden sich über die die Mittel (9a,9b,17a,17b,10a,10b,25a, 25b) zur lösbaren Verbindung erstreckenden Teile (19a) der Klemmbereiche (6a,6b) mindestens doppelt so lang wie der andere Teil (19b) ist.

5. Sattelstütze nach einem der Ansprüche 1 bis 4, **dadurch gekennzeichnet, dass** die längeren, der sich über die Mittel (9a,9b,17a,17b,10a,10b,25a,25b) zur lösbaren Verbindung erstreckenden Teile (19a) der Klemmbereiche (6a,6b) jedes Klemmteiles (7,8a,8b) in gleicher Richtung ausgerichtet sind.

6. Klemmvorrichtung (4) für ein Sattelgestell (5), das zwischen parallel verlaufenden Klemmbereichen (6a,6b) mindestens eines unteren und mindestens eines oberen Klemmteils (7, 8a, 8b) der Klemmvorrichtung klemmbar ist, wobei die Klemmbereiche (6a, 6b) in rinnenartigen Vertiefungen der Klemmteile (7, 8a, 8b) liegen und wobei jedes Klemmteil (7, 8a, 8b) Mittel (9a,9b,17a,17b,10a,10b) zur lösbaren Verbindung mit einem Sattelstützenkopf (3)aufweist, wobei die sich über die Mittel (9a,9b,17a,17b,10a,10b) zur lösbaren Verbindung mit dem Sattelstützenkopf (3) jedes Klemmteils in Richtung von dessen Stirnseiten (18a,18b) erstreckenden Teile (19a,19b) der Klemmbereiche (6a,6b) unterschiedlich lang sind, **dadurch gekennzeichnet, dass** die Klemmvorrichtung (4) ein unteres Klemmteil (7) mit zwei Durchtrittsöffnungen (9a,9b) und zwei obere Klemmteile (8a,8b) mit je einer Durchtrittsöffnung (17a,17b) aufweist.

7. Klemmvorrichtung nach Anspruch 6, **dadurch gekennzeichnet, dass** einer der beiden sich über die die Mittel (9a,9b,17a,17b,10a,10b) zur lösbaren Verbindung mit dem Sattelstützenkopf (3) erstreckenden Teile (19a) der Klemmbereiche (6a,6b) mindestens doppelt so lang wie der andere Teil (19b) ist.

8. Verfahren zur Längsverstellung eines Sattelgestells eines Fahrradsattels an einer Sattelstütze nach einem der Ansprüche 1 bis 5, **dadurch gekennzeichnet, dass**
- die Mittel (9a,9b,17a,17b,10a,10b,21,22) zur Verbindung zwischen den in einer ersten Position befindlichen Klemmteilen (7,8a,8b,21,22) und dem Sattelstützenkopf (3) gelöst werden, wobei durch Drehung der Klemmteile (7,8a,8b,21,22) um 180° im Sattelstützenkopf (3) die Sattelposition in der horizontalen Länge verstellt wird,
- die Klemmteile (7,8a,8b,21,22) in einer von der ersten Position verschiedenen zweiten Position wieder mit dem Sattelstützenkopf (3) verbunden und das Sattelgestell (5) zwischen den in den rinnenartigen Vertiefungen liegenden Klemmbereichen (6a,6b) der Klemmteile (7,8a,8b) eingeklemmt wird,
- wobei die längeren, der sich über die Mittel (9a,9b,17a,17b,10a,10b,25a,25b) zur lösbaren Verbindung mit dem Sattelstützenkopf (3) erstreckenden Teile (19a)der Klemmbereiche (6a,6b) jedes Klemmteiles (7,8a,8b,21,22) in beiden Positionen in gleicher Richtung ausgerichtet sind.

## Claims

1. A seat post (1) comprising a clamping device (4) for a saddle rail (5) arranged at a seat post head (3), which can be clamped between parallel running clamping regions (6a, 6b) of at least one lower and at least one upper clamping part (7, 8a, 8b), wherein the clamping regions (6a, 6b) lie in groove-like recesses of the clamping parts (7, 8a, 8b) and wherein each clamping part (7, 8a, 8b) has means (9a, 9b, 17a, 17b, 10a, 10b) for detachable connection to the seat post head (3), wherein the parts (19a, 19b) of the clamping regions (6a, 6b) extending via the means (9a, 9b, 17a, 17b, 10a, 10b) for the detachable connection of each clamping part (7, 8a, 8b) in the direction of .the front sides (18a, 18b) thereof are of different length, **characterised in that** the clamping device (4) comprises a lower clamping part (7) having two through openings (9a, 9b) and two upper clamping parts (8a, 8b) having respectively one through opening (17a, 17b).

2. The seat post (1) comprising a clamping device (4) for a saddle rail (5) arranged at a seat post head (3), which can be clamped between parallel running clamping regions (6a, 6b) of a lower and an upper clamping part (21, 22), wherein the clamping regions (6a, 6b) lie in groove-like recesses of the clamping parts (21, 22) and wherein each clamping part (21, 22) has means (25a, 25b) for detachable connection to the seat post head (3), wherein the parts (19a, 19b) of the clamping regions (6a, 6b) extending via the means (25a, 25b) for the detachable connection of each clamping part (21, 22) in the direction of the front sides (18a, 18b) thereof are of different length, **characterised in**
- **that** the means (25a, 25b) for detachable connection are configured as cylindrical webs (25a, 25b),
- **that** the web (25a) of the lower clamping part (21) connects section (26a, 26b) of the lower clamping part (21) to one another, which have parallel running clamping regions (6a),
- **that** the web (25b) of the upper clamping part (21) connects sections (26a, 26b) of the upper clamping part (21) to one another, which have parallel running clamping regions (6b) and
- **that** the web (25a) of the lower and the web (25b) of the upper clamping part together form a circular cylinder which is embraced by a clamping device formed on the seat post head (3) which by means of a central clamping screw (24) braces the two webs (25a, 25b) and therefore the sections (26a, 26b) disposed thereon towards one another.

3. The seat post according to claim 1, **characterised in that** each clamping part (7, 8a, 8b) comprises at least one through opening (9a, 9b, 17a, 17b) for a clamping screw (10a, 10b) disposed between the clamping regions (6a, 6b), which connects the clamping parts (7, 8a, 8b) to the seat post head (3) and that the parts (19a, 19b) of the clamping regions (6a, 6b) extending via the through opening(s) (9a, 9b, 17a, 17b) of each clamping part (7, 8a, 8b) in the direction of the front sides (18a, 18b) thereof are of different length.

4. The seat post according to any one of claims 1 to 3, **characterised in that** one of the two parts (19a) of the clamping regions (6a, 6b) extending over the means (9a, 9b, 17a, 17b, 10a, 10b, 25a, 25b) for detachable connection is at least twice as long as the other part (19b).

5. The seat post according to any one of claims 1 to 4, **characterised in that** the longer of the parts (19a) of the clamping regions (6a, 6b) of each clamping part (7, 8a, 8b) extending over the means (9a, 9b, 17a, 17b, 10a, 10b, 25a, 25b) for detachable connection are aligned in the same direction.

6. A clamping device (4) for a saddle rail (5) which can be clamped between parallel running clamping regions (6a, 6b) of at least one lower and at least one upper clamping part (7, 8a, 8b) of the clamping device, wherein the clamping regions (6a, 6b) lie in groove-like recesses of the clamping parts (7, 8a, 8b) and wherein each clamping part (7, 8a, 8b) has means (9a, 9b, 17a, 17b, 10a, 10b) for detachable connection to the seat post head (3), wherein the parts (19a, 19b) of the clamping regions (6a, 6b) extending via the means (9a, 9b, 17a, 17b, 10a, 10b) for the detachable connection to the seat post head (3) of each clamping part in the direction of the front sides (18a, 18b) thereof are of different length, **characterised in that** the clamping device (4) comprises a lower clamping part (7) having two through openings (9a, 9b) and two upper clamping parts (8a, 8b) having respectively one through opening (17a, 17b).

7. The clamping device according to claim 6, **characterised in that** one of the two parts (19a) of the clamping regions (6a, 6b) extending over the means (9a, 9b, 17a, 17b, 10a, 10b) for detachable connection is at least twice as long as the other part (19b).

8. A method for the longitudinal adjustment of a saddle rail of a bicycle saddle on a seat post according to one of claims 1 to 5, **characterised in that**
- the means (9a, 9b, 17a, 17b, 10a, 10b, 21, 22) for connection between the clamping parts (7, 8a, 8b, 21, 22) located in a first position and the seat post head (3) are released, whereby the saddle position is adjusted in the horizontal length by turning the clamping parts (7, 8a, 8b, 21, 22) through 180° in the seat post head (3),
- the clamping parts (7, 8a, 8b, 21, 22) are connected to the seat support head (3) again in a second position different from the first position and the saddle rail (5) is clamped between the clamping regions (6a, 6b) of the clamping parts (7, 8a, 8b) lying in the groove-like recesses,
- wherein the longer parts (19a) of the clamping regions (6a, 6b) of each clamping part (7, 8a, 8b, 21, 22) extending via the means (9a, 9b, 17a, 17b, 10a, 10b, 25a, 25b) for the detachable connection to the seat post head (3) are aligned in the same direction in both positions.

## Revendications

1. Tige de selle (1) avec un dispositif de serrage (4) pour un rail de selle (5) disposé sur une tête de tige de selle (3), qui peut se serrer entre des zones de serrage (6a, 6b) s'étendant à la parallèle d'au moins une pièce de serrage inférieure et d'au moins une supérieure (7,8a,8b), les zones de serrage (6a, 6b) se situant dans des creux de type rigoles des pièces de serrage (7, 8a, 8b) et chaque pièce de serrage (7, 8a, 8b) comportant des moyens (9a, 9b, 17a, 17b, 10a, 10b) pour la liaison amovible avec la tête de tige de selle (3), les pièces (19a,19b) des zones de serrage (6a,6b) s'étendant par l'intermédiaire des moyens (9a, 9b, 17a, 17b, 10a, 10b) pour la liaison amovible de chaque pièce de serrage (7, 8a, 8b) en direction de la face frontale (18a, 18b) de ces dernières étant de différentes longueurs, **caractérisée en ce que** le dispositif de serrage (4) comporte une pièce de serrage (7) inférieure avec deux orifices de passage (9a,9b) et deux pièces de serrage (8a,8b) supérieures avec un orifice de passage (17a,17b) chacune.

2. Tige de selle (1) avec un dispositif de serrage (4) pour un rail de selle (5) disposé sur une tête de tige de selle (3), qui peut se serrer entre des zones de serrage (6a, 6b) s'étendant à la parallèle d'une pièce de serrage inférieure et supérieure (21, 22), les zones de serrage (6a, 6b) se situant dans des creux de type rigoles des pièces de serrage (21, 22) et chaque pièce de serrage (21, 22) comportant des moyens (25a, 25b) pour la liaison amovible avec la tête de tige de selle (3), les pièces (19a, 19b) des zones de serrage (6a, 6b) s'étendant par l'intermédiaire des moyens (25a, 25b) pour la liaison amovible de chaque pièce de serrage (21, 22) en direction de la face frontale (18a,18b) de ces dernières étant de différentes longueurs, **caractérisée en ce que**
- les moyens (25a, 25b) pour la liaison amovible sont conçus en tant que barrettes cylindriques (25a, 25b),
- la barrette (25a) de la pièce de serrage (21) inférieure relie ensemble des parties (26a, 26b) de la pièce de serrage (21) inférieure qui comportent les zones de serrage (6a) s'étendant à la parallèle,
- la barrette (25b) de la pièce de serrage (21) supérieure relie ensemble des parties (26a, 26b) de la pièce de serrage (21) supérieure qui comportent les zones de serrage (6b) s'étendant à la parallèle,
- la barrette (25a) de la pièce de serrage inférieure et la barrette (25b) de la pièce de serrage supérieure forment ensemble un cylindre circulaire qui est entouré par un dispositif tenseur conçu sur la tête de tige de selle (3), qui avec une vis de tension (24) centrale contraint l'une contre l'autre les deux barrettes (25a, 25b) et de ce fait les parties (26a, 26b) qui sont disposées sur ces dernières.

3. Tige de selle selon la revendication 1, **caractérisée en ce que** chaque pièce de serrage (7,8a,8b) comporte au moins un orifice de passage (9a,9b,17a,17b) disposé entre les zones de serrage (6a,6b) pour une vis de serrage (10a,10b) qui relie les pièces de serrage (7,8a,8b) avec la tête de tige de selle (3) et **en ce que** les pièces (19a,19b) des zones de serrage (6a,6b) s'étendant par l'intermédiaire de(s) l'(des) orifice(s de passage (9a,9b,17a,17b) de chaque pièce de serrage (7,8a,8b) en direction des faces frontales (18a,18b) de ces dernières sont de longueurs différentes.

4. Tige de selle selon l'une quelconque des revendications 1 à 3, **caractérisée en ce que** l'une des deux pièces (19a) des zones de serrage (6a, 6b) s'étendant par l'intermédiaire des moyens (9a, 9b, 17a, 17b, 10a, 10b, 25a, 25b) pour la liaison amovible a au moins le double de la longueur des autres pièces (19b).

5. Tige de selle selon l'une quelconque des revendications 1 à 4, **caractérisée en ce que** les pièces (19a) les plus longues des zones de serrage (6a, 6b) de chaque zone de serrage (7, 8a, 8b) s'étendant par l'intermédiaire des moyens (9a, 9b, 17a, 17b, 10a, 10b, 25a, 25b) pour la liaison amovible sont orientées dans la même direction.

6. Dispositif de serrage (4) pour un rail de selle (5) qui peut se serrer entre des zones de serrage (6a, 6b) s'étendant à la parallèle d'au moins une pièce de serrage inférieure et d'au moins une supérieure (7, 8a,8b), les zones de serrage (6a, 6b) se situant dans des creux de type rigole des pièces de serrage (7, 8a, 8b) et chaque pièce de serrage (7, 8a, 8b) comportant des moyens (9a, 9b, 17a, 17b, 10a, 10b) pour la liaison amovible avec la tête de tige de selle (3), les pièces (19a, 19b) des zones de serrage (6a, 6b) s'étendant par l'intermédiaire des moyens (9a, 9b, 17a, 17b, 10a, 10b) pour la liaison amovible de chaque pièce de serrage en direction de la face frontale (18a, 18b) de ces dernières étant de différentes longueurs, **caractérisé en ce que** le dispositif de serrage (4) comporte une pièce de serrage (7) inférieure avec deux orifices de passage (9a, 9b) et deux pièces de serrage (8a, 8b) supérieures avec un orifice de passage (17a, 17b) chacune.

7. Dispositif de serrage selon la revendication 6, **caractérisé en ce que** l'une des deux pièces (19a) des zones de serrage (6a,6b) s'étendant par l'intermédiaire des moyens (9a, 9b, 17a, 17b, 10a, 10b) pour la liaison amovible avec la tête de tige de selle (3) a au moins le double de la longueur des autres pièces (19b).

8. Procédé pour le réglage en longueur d'un rail de selle d'une selle de bicyclette sur une tige de selle selon l'une quelconque des revendications 1 à 5, **caractérisé en ce**
- **qu'**on desserre les moyens (9a, 9b, 17a, 17b, 10a, 10b, 21, 22) pour la liaison entre les pièces de serrage (7, 8a, 8b, 21, 22) se trouvant dans une première position et la tête de tige de selle (3), alors que par rotation des pièces de serrage (7, 8a, 8b, 21, 22) de 180° dans la tête de tige de selle (3), on ajuste la position de la selle dans la longueur horizontale,
- on relie de nouveau les pièces de serrage (7, 8a, 8b, 21 ,22) avec la tête de tige de selle (3) dans une deuxième position différente de la première position et on serre le rail de selle (5) entre les zones de serrage (6a, 6b) situées dans les creux de type rigoles des pièces de serrage (7, 8a, 8b),
- les plus longues des pièces (19a) des zones de serrage (6a, 6b) de chaque pièce de serrage (7, 8a, 8b, 21 ,22) s'étendant par l'intermédiaire des moyens (9a, 9b, 17a, 17b, 10a, 10b, 25a, 25b) pour la liaison amovible avec la tête de tige de selle (3) étant orientées dans la même direction dans les deux positions.
